# NEW EUROPEAN PATENT SPECIFICATION

(11) **EP 2 243 763 B2**
(45) Date of publication and mention of the opposition decision: **06.07.2022**
(45) Mention of the grant of the patent: 08.10.2014
(21) Application number: 10170500.2
(22) Date of filing: 02.12.2003
(51) Int. Cl.: C07C 35/21

(54) **A selective synthesis of organophosphites**
SELEKTIVE SYNTHESE VON ORGANOPHOSPHITEN
SYNTHESE SELECTIVE D'ORGANOPHOSPHITE

(30) Priority: 02.12.2002 US 430426 P; 04.06.2003 US 454043
(43) Date of publication of application: 27.10.2010
(62) Divisional of application: 03787252.0
(73) Proprietor: INVISTA Textiles (U.K.) Limited, Manchester M2 3DE (GB)
(72) Inventor: Ritter, Joachim, C., Wilmington, DE DE 19810 (US)
(74) Representative: Carpmaels & Ransford LLP

(56) References cited:
- US-A- 4 120 917
- US-A- 5 235 086
- DATABASE CAPLUS [Online] CHEMICAL ABSTRACTS SERVICE, COLUMBUS, OHIO, US; 1977, Gazizov, T. Kh.; Kharlamov, V. A.; Pashinkin, A. P.; Pudovik, A. N.: "Reaction of derivatives of phosphorus(III) with acids" XP002605734 retrieved from STN Database accession no. 87:484449
- DATABASE CAPLUS [Online] CHEMICAL ABSTRACTS SERVICE, COLUMBUS, OHIO, US; 1958, Abramov, V. S.; Khairullin, V. K.: "Mixed Esters of 1,1,1-trichloro-tert. -butyl 1-trichloromethylcyclohexyl phosphite. II" XP002606047 retrieved from STN Database accession no. 52:15596

## Description

### FIELD OF THE INVENTION

This application relates to processes for the synthesis of mono-, di- and tri-organophosphites.

### BACKGROUND OF THE INVENTION

Organophosphites of the general structure (R¹O)P(OR²)(OR³) are used in a number of commercially important applications including their use as antioxidants, stabilizers, anti-wear additives and as ligands for various catalytic processes. Organophosphites are generally produced from PX₃ (X = Cl, Br, I) and alcohols. The reaction occurs stepwise by displacement of X of PX₃ with OR of alcohol ROH and results in the formation of mono-, di- and tri-organophosphite esters e.g., (R¹O)PX₂, (R¹O)(R²O)PX, and (R¹O)P(OR²)(OR³) and acid HX. The acid can be removed by means of physical separation or by means of acid base reaction using organic or inorganic bases.

several methods for making organophosphites, described in Houben-Weyl, Bd. XXII/2 pages 12-17, G. Thieme Verlag, Stuttgart 1964, and supplement E1, pages 413-421 Stuttgart, New York 1982, are known for the production of phosphites using readily available PCl₃ and the corresponding alcohols. However, the selectivity of the displacement of Cl by the alcohol to give the corresponding phosphorous dichloridite (R¹O)P(Cl₂) and chloridite (R¹O)P(OR²)(Cl), respectively, is generally low. This limits the formation of any specific phosphite of the general structure (R¹O)P(OR²)(OR³) to low yields, except when R¹, R² and R³ are the same. Though for some applications this low selectivity is acceptable, for others, selectivity to a specific structure with different R groups is highly desirable.

In Houben-Weyl, Bd. XXII/2 pages 12-17, G. Thieme Verlag, Stuttgart 1964, it is summarized that a large excess of PCl₃ is needed to preferably form a dichloridite from aliphatic or aromatic alcohols suppressing the second displacement reaction and distillation of the crude dichloridite is obligatory to separate the excess PCl₃. Similarly the formation of chloridite from dichloridite and alcohol shows low selectivity, and extensive purification by distillation is needed.

WO 01/32666 describes a high yield process for the synthesis of PCl(O-m-tolyl)₂ however, due to low selectivities, a time consuming process consisting of a) distillation to separate from by-products dichloridite PCl₂(O-m-tolyl) and triarylphosphite P(O-m-tolyl)₃ and b) subsequent recycle of the by-products is needed.

From WO96/22968 it is known that higher selectivity for the synthesis of chloridites and dichloridites can be achieved by a stepwise protective group approach, however this reaction sequence requires two additional reaction steps for each RO group introduced adding considerable cost to the overall process.

Selectivities to form chloridite and/or dichloridite from PCl₃ and ROH are generally higher if organic tertiary amines are used in equimolar amounts. For example US 4,120,917 describes the use of tertiary amines as acid scavengers for the production of alkylphosphorodichloridites. A mixture of amine and alcohol is added to an excess of PCl₃ in an organic solvent to produce the corresponding dichloridites in moderate yields. However, a five-fold excess of PCl₃ is needed to suppress the formation of chloridite. In addition, subsequent filtration of the ammonium salt is required and PCl₃ has to be removed by distillation before a mixed phosphite can be produced. Both filtration and PCl₃ distillation are significant cost factors.

US 6,069,267 and EP 1234831 disclose that yields for phosphorous dichloridite (R¹O)P(Cl₂) and chloridite (R¹O)P(OR²)(Cl) derived from aromatic alcohols, PCl₃, and trialkylamines are satisfactory only if temperatures below 0°C between 0°C and -20°C are deployed. Low temperature and viscosity of the product mixture within this temperature range add significantly to operating cost and process complexity.

Furthermore, US 6,069,267 describes a process for the selective synthesis of organodiphosphite compounds using PCl₃ and aryl alcohols. Gazizov, T. Kh et al.; Inst. Org. Fiz. Chem., Kazan, USSR; "Reaction of derivatives of phosphorus (III) with acids", discloses the very low temperature (-70 to -50°C) synthesis of dichlorophosphites by reaction of PCl₃ with ethanol or propanol and NEt₃.

However, the procedure only gives acceptable yields with phenols containing bulky ortho-substituents as alcohols and does not provide high yields for a general range of mixed triarylphosphites within a commercially favorable temperature range.

A selective commercial production of organophosphites of the general formula (R¹O)P(OR²)(OR³) requires a method by which the displacement of X by the alcohol in PX₃ and in ROPX₂ occurs with high selectivity under commercially feasible conditions. It would be desirable to have high yield, highly selective processes for the production of (R¹O)PX₂, (R¹O)(R²O)PX and (R¹O)P(OR²)(OR³) that are not restricted to low temperatures and at a cost that is commercially feasible. The invention described herein is such a process.

### SUMMARY OF THE INVENTION

The invention is defined by the appendant claims. The description that follows is subject to this limitation. All aspects and embodiments which are labelled "aspects of the invention" but not covered by the claims are merely aspects of the present disclosure and do not form part of the invention.

It has been discovered that the selectivity in the displacement reaction of X in PX₃ by the OR¹ group of an alcohol R¹OH and in the displacement reaction of X in (R¹O)PX₂ by the OR² group of an alcohol R²OH in the presence of a triorganoamine (R')(R")(R"')N resulting in the formation of, respectively, the mono-, and di- organophosphite esters e.g., (R¹O)PX₂ and (R¹O)(R²O)PX strongly depends on the method of the addition of the triorganoamine and the respective alcohol. The compound (R¹O)PX₂ can be made with increased selectivity by the reaction of PX₃, alcohol R¹OH and a triorganoamine (R')(R")(R"')N, and the compound (R¹O)(R²O)PX can be made with increased selectivity by the reaction of (R¹O)PX₂ , an alcohol R²OH and a triorganoamine (R')(R")(R"')N if the triorganoamine and the respective alcohol are added (i) to PX₃ for making (R¹O)PX₂ and (ii) to (R¹O)PX₂ for making (R¹O)(R²O)PX, such that the additions of the triorganoamine and the alcohol R¹OH to PX₃ for making (R¹O)PX₂ or the additions of the triorganoamine and the alcohol R²OH to (R¹O)PX₂ for making (R¹O)(R²O)PX are done in a separate but concurrent fashion or in a separate and in alternating portions of the triorganoamine and the respective alcohol. The method of addition to the reaction mixture allows the triorganoamine and the respective alcohol to be present in low concentrations and in a low molar ratios relative to PX₃ and (R¹O)PX₂ for making (R¹O)PX₂ and (R¹O)PX₂ and (R¹O)(R²O)PX for making (R¹O)(R²O)PX during the largest part of the addition period without using excessive PX₃ for making (R¹O)PX₂, (R¹O)PX₂ for making (R¹O)(R²O)PX or excessive solvent for alcohol and triorganoamine. The disclosed methods allow a wider range of reaction temperatures including significantly higher reaction temperatures as well as higher yields as previously reported in the art.

The present invention is, therefore:
a method of producing (R¹O)PX₂ by the reaction of PX₃, alcohol R¹OH and a triorganoamine (R')(R")(R"')N at a temperature greater than -25°C, such that the additions of the triorganoamine and the alcohol R¹OH are done in a separate but concurrent fashion or in a separate and in alternating portions of the triorganoamine and the respective alcohol, wherein X is selected from the group consisting of Cl, Br and I, R¹ is selected from the group consisting of C₁₋₁₈ alkyl, C₆₋₁₈ aryl and C₃-C₁₈ cycloalkyl radicals; and R'R"R"' are independently selected from the group consisting of C₁ to C₁₈ alkyl, C₆ to C₁₈ aryl and C₄ to C₁₈ heteroaryl radicals;
wherein the amount of alcohol OH groups per phosphorus bound X groups is 1.0 to 1.2 molar equivalents of alcohol OH groups per molar equivalent of phosphorous bound X groups to be substituted;
wherein said method comprises: contacting a first solution comprising a predetermined amount of PX₃ dissolved in an aprotic solvent with (i) a second solution comprising a predetermined amount of an alcohol R¹OH, and (ii) a third solution comprising a predetermined amount of a triorganoamine (R')(R")(R"')N to produce a composition comprising the compound (R¹O)PX₂, wherein the second solution contains no triorganoamine and the third solution contains no alcohol.
   In said method the second and third solutions may be added to the first solution separately by either
   (a) adding each of the second and third solutions concurrently and continuously into the first solution at a rate of no greater than 4 molar equivalents of each of the alcohol and triorganoamine, relative to the PX₃, per hour until the predetermined amounts of each of the alcohol and triorganoamine have been added to the first solution, provided that at any given time, the total molar amount of alcohol added does not exceed the total molar amount of trioganoamine added by more than 25% of the total molar amount of the triorganoamine added; or
   (b) adding each of the second and third solutions concurrently and discontinuously into the first solution at a rate of no greater than 4 molar equivalents of each of the alcohol and triorganoamine, relative to the PX₃, per hour In aliquots of the second solution containing no more than 0.5 molar equivalents of alcohol and in aliquots of the third solution containing no more than 0.5 equivalents of triorganoamine, until the predetermined amounts of each of the alcohol and triorganoamine have been added to the first solution; or
   (c) adding each of the second and third solutions discontinuously into the first solution at a rate of no greater than 4 molar equivalents of each of the alcohol and triorganoamine, relative to the PX₃, per hour in aliquots of the second solution containing no more than 0.5 molar equivalents of alcohol and In aliquots of the third solution containing no more than 0.5 equivalents of triorganoamine, until the predetermined amounts of each of the alcohol and triorganoamine have been added to the first solution by repetitively adding an aliquot of either the triorganoamine followed sequentially by an aliquot of the alcohol, or an aliquot of the alcohol followed by an aliquot of the triorganoamine, until the predetermined amounts of each of the alcohol and triorganoamine have been added to the first solution; to produce the composition comprising the compound of the formula R¹OPX₂, provided that In either of the alternatives (b) or (c), for any given additions, whether concurrent or sequential, within a series of discontinuous additions, the molar difference between the triorganoamine added and the alcohol added does not exceed 0.5 equivalent, relative to the PX₃.

### DETAILED DESCRIPTION

The present invention describes methods for the synthesis of the compound (R¹O)PX₂ as defined in the claims. Also disclosed are methods for the synthesis of compounds (R¹O)(R²O)PX, (R¹O)(R²O)₂P, and (R¹O)P(OR²)(OR³) ,wherein X is selected from the group consisting of Cl, Br and I, and wherein R¹, R², and R³ can be independently selected from the group consisting of C₁ to C₁₈ alkyl, C₆ to C₁₈ aryl, and C₃ to C₁₈ cycloalkyl radicals.

Disclosed for the synthesis of the compound (R¹O)PX₂, a first solution comprising a predetermined amount of PX₃ dissolved in an aprotic solvent is contacted with (i) a second solution comprising a predetermined amount of an alcohol R¹OH, and a predetermined amount of a triorganoamine (R')(R")(R"')N, wherein R', R" and R"' are independently selected from the group consisting of C₁ to C₁₈ alkyl, C₆ to C₁₈ aryl and C₄ to C₁₈ heteroaryl radicals, and wherein the molar ratio of the alcohol to the triorganoamine is greater than 5, and (ii) a third solution comprising a predetermined amount of the triorganoamine and a predetermined amount of the alcohol, wherein the molar ratio of the triorganoamine to the alcohol is greater than 5, to produce the composition comprising the compound of the formula (R¹O)PX₂.

Disclosed for the synthesis of the compound (R¹O)(R²O)PX, a first solution comprising a predetermined amount of R¹OPX₂ dissolved in an aprotic solvent is contacted with (i) a second solution comprising a predetermined amount of an alcohol R²OH, and a predetermined amount of a triorganoamine (R')(R')(R"')N, wherein R', R" and R"' are independently selected from the group consisting of C₁ to C₁₈ alkyl, C₆ to C₁₈ aryl and C₄ to C₁₈ heteroaryl radical, and wherein the molar ratio of the alcohol to the triorganoamine is greater than 5, and (ii) a third solution comprising a predetermined amount of the triorganoamine and a predetermined amount of the alcohol, wherein the molar ratio of the triorganoamine to the alcohol is greater than 5, to produce the composition comprising the compound of the formula (R¹O)(R²O)PX.

The second and third solutions can be added into the first solution separately but concurrently and continuously at a rate of no greater than 4 molar equivalents of each of the alcohol and triorganoamine, relative to the PX₃ for making (R¹O)PX₂, or relative to (R¹O)PX₂ for making (R¹O)(R²O)PX, per hour until the predetermined amounts of each of the alcohol and triorganoamine have been added to the first solution, provided that at any given time, the total molar amount of alcohol added does not exceed the total molar amount of trioganoamine added by more than 25% of the total molar amount of the triorganoamine added.

The second and third solutions can be added into the first solution separately and concurrently but discontinuously at a rate of no greater than 4 molar equivalents of each of the alcohol and triorganoamine, relative to the PX₃ for making (R¹O)PX₂, or relative to (R¹O)PX₂ for making (R¹O)(R²O)PX, per hour in aliquots of the second solution containing no more than 0.5 molar equivalents of alcohol and in aliquots of the third solution containing no more than 0.5 equivalents of triorganoamine, until the predetermined amounts of each of the alcohol and triorganoamine have been added to the first solution.

The second and third solutions can be added into the first solution separately and discontinuously at a rate of no greater than 4 molar equivalents of each of the alcohol and triorganoamine, relative to the PX₃ for making (R¹O)PX₂, or relative to (R¹O)PX₂ for making (R¹O)(R²O)PX, per hour in aliquots of the second solution containing no more than 0.5 molar equivalents of alcohol and in aliquots of the third solution containing no more than 0.5 equivalents of triorganoamine, until the predetermined amounts of each of the alcohol and triorganoamine have been added to the first solution by repetitively adding an aliquot of either the triorganoamine followed sequentially by an aliquot of the alcohol, or an aliquot of the alcohol followed by an aliquot of the triorganoamine, until the predetermined amounts of each of the alcohol and triorganoamine have been added to the first solution;

In either of the alternatives above for discontinuous additions, for any given additions, whether concurrent or sequential, within a series of discontinuous additions, the molar difference between the triorganoamine added and the alcohol added does not exceed 0.5 equivalent, relative to the PX₃ for making (R¹O)PX₂, or relative to (R¹O)PX₂ for making (R¹O)(R²O)PX.

The composition comprising the compound of the formula (R¹O)PX₂ made by the method described above can be used as the first solution for making (R¹O)PX₂. One can use the product of reaction of PX₃ with an alcohol R¹OH and any triorganoamine by a method different from that described above. For example, (R¹O)PX₂ prepared by less selective methods described in the prior art and dissolved in an aprotic solvent can also be used.

The above methods can be used for successive replacement of X of PX₃ by a polyalcohol to produce products of the general formula A(OPX₂)ₙ, B[(R¹O)(X)PO]ₙ, etc., where A and B can be independently selected from the group consisting of C₂ to C₁₈ alkyl, C₃ to C₁₈ cycloalkyl, and C₆ to C₁₈ aryl di-, tri- or tetra-radicals corresponding to n=2, n=3 and n=4.

It is critical to add the triorganoamine and the alcohol separately in such a way that both materials exhibit low concentration in the reaction mixture where the formation of the products occurs. Furthermore it is important that the triorganoamine and the alcohol concentration relative to PX₃ and (R¹O)PX₂ for making (R¹O)PX₂ and (R¹O)PX₂ and (R¹O)(R²O)PX for making (R¹O)(R²O)PX are low during the largest part of the addition period. This can be achieved in the above described ways, for example by either separate and concurrent both continuous and discontinuous addition of triorganoamine and alcohol or by separate and discontinuous repetitive additions of small aliquot portions one followed by the other of the triorganoamine and the alcohol. The separate and concurrent, both continuous and discontinuous additions can be achieved by using one or more separate feed lines for each the triorganoamine and the alcohol attached either directly to the reaction vessel at different locations, or to an external recirculation pipe. In a preferred mode of the separate and discontinuous repetitive additions of aliquot portions one followed by the other of the triorganoamine and the alcohol, the addition begins with the addition of an aliquot portion of the triorganoamine. In a more preferred version of this addition mode at least two alternating additions are employed. Most preferred is the separate but concurrent addition mode.

The preferred amount of each alcohol OH group added per equivalent X attached to P is important for the product distribution and depends on the individual selectivity of the substrates in the displacement reaction and the target distribution of the corresponding phosphite. More preferred but not restrictive are 1.00 to 1.05 mol equivalents of alcohol OH groups per phosphorous bound X groups to be substituted.

The ratio between added triorganoamine and alcohol at any given time of the process is important for the selectivity of the displacement reaction of X by R¹O or by R²O. For polyalcohols each alcohol OH group represents a molar equivalent of OH in the displacement reaction of X. It is preferred to keep the difference in the amount of added molar equivalents of triorganoamine and molar equivalents of alcohol OH groups at any given time of the addition between 0.0 and 1.0 equivalents. In a more preferred version of this method the difference in the amount of added molar equivalents of triorganoamine and molar equivalents of alcohol OH groups at any given time of the addition is kept between 0.0 and 0.05 equivalents. Furthermore it is preferred to keep conditions where the amount of added molar equivalents of triorganoamine exceeds the amount of added molar equivalents of alcohol OH groups at any given time of the addition by 0.0-0.05 equivalents. In a most preferred version of this invention triorganoamine and alcohol are added in a separate but concurrent fashion in equimolar amounts such that the amount of molar equivalents of added alcohol OH groups does not exceed the molar equivalent amount of added triorganoamine at any given time.

The composition comprising the compound of the formula (R¹O)(R²O)PX, made by the methods described above, can be contacted with additional amount of the alcohol R²OH and a triorganoamine to produce a product comprising the compound of the formula (R¹O)(R²O)₂P. The composition comprising the compound of the formula (R¹O)(R²O)PX, made by the methods described above, can be contacted with an alcohol R³OH and a triorganoamine to produce a product comprising the compound of the formula (R¹O)P(OR²)(OR³).

During the addition of the alcohol and the triorganoamine, good agitation using methods known by those skilled in the art is important to provide sufficient heat removal and to avoid areas of highly concentrated triorganoamine or alcohol. This invention is especially useful for the .production of mixed compounds, e.g., compounds (R¹O)(R²O)₂P and (R¹O)P(OR²)(OR³). At any given time of the concurrent alcohol and triorganoamine addition, the alcohol feed may be changed to a different alcohol. Mixed phosphites, (R¹O)(R²O)PX can be synthesized in high selectivity by first adding approximately one equivalent of alcohol R¹OH and triorganoamine, separately and concurrently, followed by approximately one equivalent of alcohol R²OH and triorganoamine.

The triorganoamine, (R')(R")(R"')N used in the methods of this invention should be as dry as possible to minimize hydrolysis of phosphorus reactants and products and are independently selected from the group consisting of aliphatic, aromatic and hetero aromatic amines, or combinations thereof. The triorganoamine used may be substituted or unsubstituted. It is preferred, however, that the corresponding triorgano-ammonium salt exhibits no acidic reactivity in the reaction medium to avoid undesired rearrangement reactions of the phosphite products. Preferred amines are amines selected from the group consisting trialkylamines wherein the alkyl groups are linear, branched or cyclic, have 1 to 12 carbon atoms and may be linked together. More preferred amines are chosen from the group of trimethylamine, dimethylethylamine, diethylmethylamine, triethylamine, dimethylpropylamine and dimethylisopropylamine.

Aprotic solvents are suitable provided they do not react with PX₃, triorganoamine, alcohol and triorgano-ammonium salts. The solvent should not have the ability to dissolve the triorganoammonium salt produced during the reaction if the acidity associated with dissociated triorganoammonium salts can cause undesired rearrangement reactions. Furthermore, a solvent with a melting point below the desired reaction temperature is preferred. Preferred solvents are selected from the group of organic aprotic solvents or mixtures thereof. More preferred are solvents or solvent mixtures selected from the group of aliphatic and aromatic solvents. Most preferred solvents or solvent mixtures are aromatic solvents selected from the group consisting of toluene, xylenes, 1,2,3,4-tetrahydronaphtaline, and ethylbenzene.

The rates of addition of triorganoamine and alcohol are generally limited by the mixing and cooling capabilities of the equipment. Practical addition times range from 15 minutes to 12 hours. A preferred range is 1 to 6 hours.

Reagent and product concentrations are generally limited by the ability to effectively mix the resulting slurry of triorganoamine-HX. The concentrations of the phosphorous species, the triorganoamine, and the alcohol can be independently chosen only limited by density and solubility as long as the above and below mentioned process conditions described herein are maintained. The alcohols and the amines may be fed neat or diluted with solvent. The feed containing alcohol contains no triorganoamine and the feed containing triorganoamine contains no alcohol. A preferred concentration range for the triorganoamine and alcohol feed is 1 to 4 mol/l in feed solutions. The final concentration of phosphorus-containing product in the reactor may range from about 1% to 35%. The preferred concentration of the phosphorous containing product in the reactor ranges from 7% to 25% by weight.

In the process of this invention, water in the solvent, triorganoamine, alcohol, and reaction vessel can decrease yields to the desired monophosphite, diphosphite, and triphosphite products. Hence, it is necessary to reduce the water content in the solvent, reagents, and vessel to concentrations that generate acceptable yields on an economic basis and conduct the reaction under an inert atmosphere.

Suitable PX₃ compounds are those where X is capable of exchange reactions with alcohols in the presence of a triorganoamine to form a P-O bond and a salt of HX-triorganoamine. Preferred groups for X are Cl, Br, I. Most preferred is Cl.

The preferred reaction temperature for a given displacement of X in PX₃ depends on the steric and electronic nature of the alcohol and the decomposition temperature of the corresponding products. However, this invention is not restricted to the low temperature range as previously described in the prior art. Aromatic alcohols give good selectivity to the corresponding phosphorodichloridites and chloridites over a wide range of temperatures even at 55°C. In most cases, sterically demanding alcohols such as ortho-substituted phenols give better yields to the corresponding dichloridites and chloridites compared to less-hindered alcohols such as unsubstituted or meta- and para-substituted aromatic alcohols lacking ortho-substitution, If the reactivity of the alcohol is low, a reaction temperature high enough to provide a reaction rate equal to or faster than the addition rate is preferred. Since under commercial operation the temperature range achievable is subject to limits of the equipment available, temperatures above -25°C are preferred. A preferred but not limiting temperature range for this process is -25°C to +65°C.

The reaction is relatively insensitive to pressure and is limited only by practical considerations. For practical reasons, preferred reaction pressure ranges from 10 psia (69 kPa) to 50 psia (345 kPa).

Compounds (R¹O)PX₂ formed by the processes of the invention and (R¹O)(R²O)PX formed by the processes described above can be transformed conveniently in the same or a separate vessel to the corresponding phosphites (R¹O)P(OR²)(OR³) and (R¹O)(R²O)₂P, respectively, thiophosphites (R¹O)P(OR²)(SR⁴), (R¹O)P(SR⁴)(SR⁵), or amidites (R¹O)P(OR²)(NR⁶R⁷), (R¹O)P(NR⁶R⁷)(NR⁸R⁹) by displacing the remaining X's of (R¹O)PX₂ or (R¹O)(R²O)PX with one or more of the groups OR², OR³, SR⁴, SR⁵, NR⁶R⁷, and NR⁸R⁹ groups wherein R², R³, R⁴, R⁵, R⁶, R⁷, R⁸ and R⁹ can be independently selected from the group consisting of C₁ to C₁₈ alkyl, C₆ to C₁₈ aryl, and C₃ to C₁₈ cycloalkyl radicals. Compound (R¹O)(R²O)PX can be hydrolyzed to (R¹O)(R²O)POH. For (R¹O)P(OR²)(OR³), this reaction product can be obtained by adding about one molar equivalent of triorganoamine followed by one equivalent of alcohol R³OH to (R¹O)PX₂. For (R¹O)P(OR²)₂ ,this reaction product can be obtained by adding about two molar equivalents of triorganoamine followed by two equivalents alcohol HOR² to (R¹O)(R²O)PX. In contrast to the formation of (R¹O)PX₂ and (R¹O)(R²O)PX, for transformation to (R¹O)P(OR²)(OR³) and derivatives described above, the alcohols and amines may be fed as a mixture, if so desired. Likewise, thiophosphites e.g., (R¹O)P(OR²)(SR⁴), (R¹O)P(SR⁴)(SR⁵), and amidites e.g., (R¹O)P(OR²)(NR⁶R⁷), (R¹O)P(NR⁶R⁷)(NR⁸R⁹) can be produced from (R¹O)PX₂ or (R¹O)(R²O)PX and secondary amines and thiols, respectively.

The process described herein can be carried out as a continuous process whereby the triorganoamine and the alcohol are added concurrently but separately into a continuous type reactor, such as a continuous flow stirred tank reactor (CSTR). Simultaneously, PX₃ is added separately or together with the triorganoamine, and the triorganoamine and the alcohol are fed separately and concurrently. This embodiment of the present invention has the advantage of smaller reaction volumes with improved mixing and heat transfer. In a more preferred variation of a continuous process a series of 2 to 10 CSTR's are used whereby the PX₃ is fed into the first reactor only and the triorganoamine and the alcohol are fed separately and concurrently in portions into each subsequent reactor. In the most preferred version of a continuous reactor a plug-flow reactor is employed where PX₃ is fed into an entry port at the beginning of the plug-flow reactor and the triorganoamine and the alcohol are added concurrently but separately in equimolar portions into multiple entry ports along the length of the plug-flow reactor.

### EXAMPLES

Structures of Phosphorochloridites and Phosphorodichloridites: 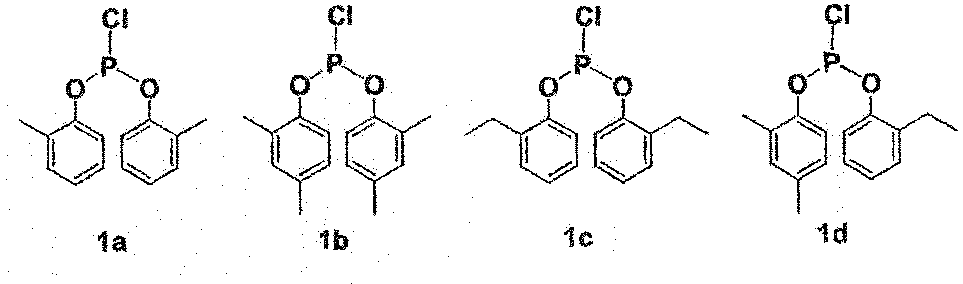 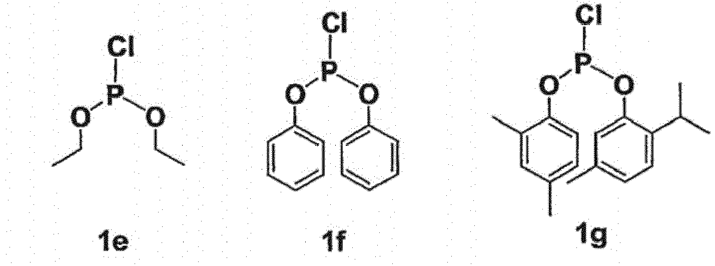 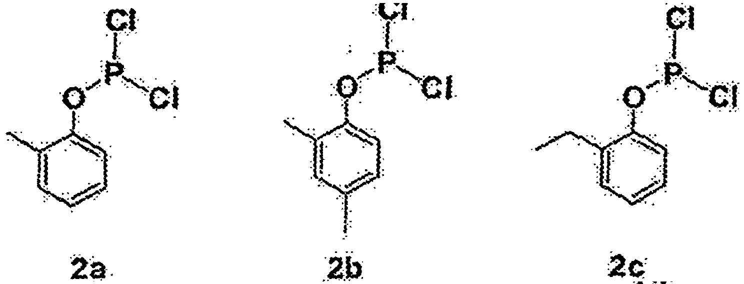 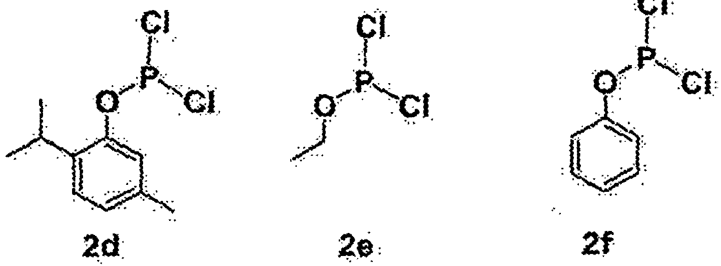 Examples 1,15, 18, and 24 show that a chloridite (illustrative) and dichloridite (according to the invention) derived from an aromatic alcohol (ArOH) with little steric hindrance can be produced in high selectivity. All ³¹P NMR chemical shifts δ (75 MHz) are given in ppm in reference to triphenylphosphineoxide (δ 25.6). Unless otherwise noted all ³¹P NMR samples were prepared by mixing 0.4 ml of the reaction volume with 0.8 ml of 0.1 molar triphenylphosphineoxide in C₆D₆. All reactions and sampling procedures were performed under the exclusion of air and moisture.

### Example 1: Synthesis of phosphorochloridite 1a (illustrative) and phosphorodichloridite 2a (according to the invention)

In a temperature controlled 250 ml baffled flask charged with 50 ml of 1.0 molar PCl₃ in toluene, a solution of 25 ml 2.0 molar triethylamine in toluene, and a solution of 25 ml 2.0 molar o-cresol in toluene were added separately and concurrently under vigorous stirring via a dual syringe pump over a period of 90 min. During the addition period, the reaction temperature was maintained at -5 °C. The ³¹P NMR analysis showed clean transformation to the corresponding dichloridite **2a** (δ 182.7) (according to the invention) in 97% selectivity. For illustrative purposes, a second 25 ml of each 2.0 molar triethylamine solution in toluene and 2.0 molar o-cresol solution in toluene were added separately and concurrently via a dual syringe pump over a period of 90 min. The ³¹P NMR analysis showed clean transformation to the corresponding chloridite **1a** (δ 161.9) in 91% overall selectivity.

Examples 2-5: demonstrate the temperature effect on the yield of **1a** (illustrative) and **2a** (according to the invention) between -15°C and + 15°C. These examples were carried out under the same conditions as Example 1 but at different temperatures. Results as derived from ³¹P NMR analysis are shown in Table 1.

**Table 1:Effect of temperature on the yield of 1a and 2a in the range of -15°C and + 15°C.**

| All examples were carried out under the same conditions as Example 1 but at different temperatures. Results are derived from ³¹P NMR analysis an given as the molar equivalent fraction of each of the components in the reaction mixture | | | | | | |
|---|---|---|---|---|---|---|
| Example | Temp (°C) | Equivalents ArOH and NEt₃ added | % **1a** | % **2a** | % PCl₃ | % (o-tolyl-O)₃P |
| 2 | -5 | 1.0 | 3 | 97 | 0 | 0 |
| | | 2.0 | 91 | 4 | 0 | 5 |
| 3 | +5 | 1.0 | 4 | 94 | 2 | 0 |
| | | 2.0 | 91 | 3 | 0 | 6 |
| 4 | -15 | 1.0 | 2 | 97 | 1 | 0 |
| | | 2.0 | 92 | 3 | 0 | 5 |
| 5 | +15 | 1.0 | 4 | 88 | 8 | 0 |
| | | 2.0 | 90 | 5 | 0 | 5 |

Examples 6-10: demonstrate the temperature effect on the yield of **1a** (illustrative) and **2a** (according to the invention) between - 20°C and + 55°C. All examples were carried out under the same conditions as Example 6 but at different temperatures. Results as derived from ³¹P NMR analysis are shown in Table 2.

### Example 6: Synthesis of phosphorochloridite 1a (illustrative) and phosphorodichloridite 2a (according to the invention)

In a temperature controlled 500 ml baffled, jacketed, glass reactor with overhead stirrer charged with 200 ml of 1.0 molar PCl₃ in toluene, a solution of 100 ml 2.0 molar triethylamine in toluene, and a solution of 100 ml 2.0 molar o-cresol in toluene were added separately and concurrently under vigorous stirring via a peristaltic pump over a period of 45 min. During the addition period the reaction temperature was maintained at -20 °C. The ³¹P NMR analysis showed clean transformation to the corresponding dichloridite **2a** (according to the invention) in 94% selectivity. For illustrative purposes, a second 100 ml of each 2.0 molar triethylamine solution in toluene and 2.0 molar o-cresol solution in toluene were added separately and concurrently via a peristaltic pump over a period of 45 min. The ³¹P NMR analysis showed clean transformation to the corresponding chloridite in 93% overall selectivity.

**Table 2: Effect of temperature on the yield of 1a and 2a in the range of - 20°C and + 55°C.**

| All examples were carried out under the same conditions as Example 6 but at different temperatures. Results are derived from ³¹P NMR analysis and given as the molar equivalent fraction of each of the components in the reaction mixture. | | | | | | |
|---|---|---|---|---|---|---|
| Example | Temp (°C) | Equivalents ArOH and NEt₃ added | % **1a** | % **2a** | % PCl₃ | % (o-tolyl-O)₃P |
| 6 | -20 | 1.0 | 3 | 94 | 3 | 0 |
| | | 2.0 | 93 | 2 | 0 | 5 |
| 7 | -5 | 1.0 | 3 | 93 | 4 | 0 |
| | | 2.0 | 91 | 4 | 0 | 5 |
| 8 | +15 | 1.0 | 4 | 93 | 3 | 0 |
| | | 2.0 | 90 | 4 | 0 | 6 |
| 9 | +35 | 1.0 | 6 | 88 | 6 | 0 |
| | | 2.0 | 89 | 4 | 0 | 7 |
| 10 | +55 | 1.0 | 5 | 91 | 4 | 0 |
| | | 2.0 | 89 | 4 | 0 | 7 |

### Example 11: This example shows the effect of a two-fold concentration increase of reactants on the yields of 1a (illustrative) and 2a (according to the invention) as compared to Example 9 in Table 3.

In a temperature controlled 500 ml baffled, jacketed, glass reactor with overhead stirrer charged with 200 ml of 2.0 molar PCl₃ in toluene, a solution of 100 ml 4.0 molar triethylamine in toluene, and a solution of 100 ml 4.0 molar o-cresol in toluene were added separately and concurrently under vigorous stirring via a peristaltic pump over a period of 80 min. During the addition period the reaction temperature was maintained at 35°C. The ³¹P NMR analysis showed clean transformation to the corresponding dichloridite **2a** (according to the invention) in 91% selectivity. For illustrative purposes, a second 100 ml of each 4.0 molar triethylamine solution in toluene and 4.0 molar o-cresol solution in toluene were added separately and concurrently via a peristaltic pump over a period of 80 min. The ³¹P NMR analysis showed clean transformation to the corresponding chloridite **1a** in 90% overall selectivity.

**Table 3: Effect of a two-fold concentration increase of reactants on the yields of 1a and 2a as compared to Example 9.**

| Results are derived from ³¹P NMR analysis and given as the molar equivalent fraction of each of the components in the reaction mixture. | | | | | | |
|---|---|---|---|---|---|---|
| Example | Temp (°C) | Equivalents and concentration of ArOH and NEt₃ added | % **1a** | % **2a** | % PCl₃ | % (o-tolyl-O)₃P |
| 9 | +35 | 1.0 (2 Molar) | 6 | 88 | 6 | 0 |
| | | 2.0 (2 Molar) | 89 | 4 | 0 | 7 |
| 11 | +35 | 1.0 (4 Molar) | 5 | 91 | 4 | 0 |
| | | 2.0 (4 Molar) | 90 | 4 | 0 | 6 |

Examples 12-14: demonstrate the effect of feed rates on the yield of **1a** (illustrative) and **2a** (according to the invention). Results are given in Table 4.These examples were carried out under the same conditions as Example 1 but at different feed rates. Results as derived from ³¹P NMR analysis are shown in Table 4.

**Table 4: Effect of feed rates on the yield of 1a and 2a.**

| These examples were carried out under the same conditions as Example 1 but at different feed rates. Results are derived from ³¹P NMR analysis and given as the molar equivalent fraction of each of the components in the reaction mixture. | | | | | | |
|---|---|---|---|---|---|---|
| Example | Feed rate equiv / hr | Equivalents ArOH and NEt₃ added | % **1a** | % **2a** | % PCl₃ | % (o-tolyl-O)₃P |
| 12 | 0.67 | 1.0 | 3 | 97 | 0 | 0 |
| | | 2.0 | 91 | 4 | 0 | 5 |
| 13 | 1.20 | 1.0 | 4 | 93 | 3 | 0 |
| | | 2.0 | 94 | 0 | 0 | 6 |
| 14 | 2.4 | 1.0 | 2 | 92 | 6 | 0 |
| | | 2.0 | 88 | 3 | 0 | 9 |

### Example 15: Synthesis of phosphorochloridite 1b (illustrative) and phosphorodichloridite 2b (according to the invention)

In a temperature controlled 250 ml baffled, flask charged with 50 mt of 1.0 molar PCl₃ in toluene, a solution of 25 ml 2.0 molar triethylamine in toluene, and a solution of 25 ml 2.0 molar 2,4-xylenol in toluene were added separately and concurrently under vigorous stirring via a dual syringe pump over a period of 90 min. During the addition period, the reaction temperature was maintained at -5 ° C. The ³¹P NMR analysis exhibited clean transformation to the corresponding dichloridite **2b** (δ 183.0) (according to the invention) in 98% selectivity. For illustrative purposes, another 26.0 ml of each 2.0 molar triethylamine solution in toluene and 2.0 molar 2,4-xylenol solution in toluene were added separately and concurrently via a dual syringe pump over a period of 90 min. The ³¹P NMR analysis exhibited clean transformation to the corresponding chloridite **1b** (δ 162.3) in 93% overall selectivity.

### Examples 16 and 17: Synthesis of phosphorochloridite 1b (illustrative) and phosphorodichloridite 2b (according to the invention) demonstrate the temperature effect on the yield at - 5°C and + 35°C 0.4 mol PCl₃ scale.

Example 16: In a temperature controlled 2000 ml baffled, jacketed, glass reactor with overhead stirrer charged with 400 ml of 1.0 molar PCl₃ in toluene, a solution of 200 ml 2.0 molar triethylamine in toluene, and a solution of 200 ml 2.0 molar 2,4-dimethylphenol in toluene were added separately and concurrently under vigorous stirring via a peristaltic pump over a period of 133 min. During the addition period, the reaction temperature was maintained at -5 ° C. The ³¹P NMR analysis showed clean transformation to the corresponding dichloridite **2b** (according to the invention) in 96% selectivity. For illustrative purposes, a second 200 ml of each 2.0 molar triethylamine solution in toluene and 2.0 molar 2,4-dimethylphenol solution in toluene were added separately and concurrently via a peristaltic pump over a period of 133 min. The ³¹P NMR analysis showed clean transformation to the corresponding chloridite **1b** in 94% overall selectivity

Example 17: In a temperature controlled 2000 ml baffled jacketed glass reactor with overhead stirrer charged with 400 ml of 1.0 molar PCl₃ in toluene, a solution of 200 ml 2.0 molar triethylamine in toluene, and a solution of 200 ml 2.0 molar 2,4-dimethylphenol in toluene were added separately and concurrently under vigorous stirring via a peristaltic pump over a period of 85 min. During the addition period, the reaction temperature was maintained at +35 °C. The ³¹P NMR analysis showed clean transformation to the corresponding dichloridite **2b (according to the invention)** in 92% selectivity. For illustrative purposes a second 206 ml of each 2.0 molar triethylamine solution in toluene and 2.0 molar 2,4-dimethylphenol solution in toluene were added separately and concurrently via a peristaltic pump over a period of 88 min. The ³¹P NMR analysis showed clean transformation to the corresponding chloridite **1 b** in 95% overall selectivity.

### Example 18: Synthesis of phosphorochloridite 1c (illustrative) and phosphorodichloridite 2c (according to the invention)

In a temperature controlled 250 ml baffled flask charged with 50 ml of 1.0 molar PCl₃ in toluene, a solution of 26 ml 2.0 molar triethylamine in toluene, and a solution of 26 ml 2.0 molar o-ethylphenol in toluene were added separately and concurrently under vigorous stirring via a dual syringe pump over a period of 90 min. During the addition period the reaction temperature was maintained at -5° deg. C. The ³¹P NMR analysis exhibited clean transformation to the corresponding dichloridite **2c** (δ 183.2) (according to the invention) in 96% selectivity. For illustrative purposes, another 24.0 ml of each 2.0 molar triethylamine solution in toluene and 2.0 molar o-ethylphenol solution in toluene were added separately and concurrently via a dual syringe pump over a period of 90 min. The ³¹P NMR analysis exhibited clean transformation to the corresponding chloridite **1c** (δ 161.5) in 93% overall selectivity.

Example 19: This example shows that the selectivity of the displacement reaction of chloride by phenolate in PCl₃ during the synthesis of dichloridite **2c** (according to the invention) decreases significantly if the amount of alcohol added exceeds the amount of triorganoamine added during the addition procedure.

In a temperature controlled 250 ml baffled flask charged with 50 ml of 1.0 molar PCl₃ in toluene, a solution of 25 ml 2.0 molar triethylamine in toluene, and a solution of 25 ml 2.5 molar o-ethylphenol in toluene were added separately and concurrently under vigorous stirring via a dual syringe pump over a period of 90 min. During the addition period, the reaction temperature was maintained at -5°C. The ³¹P NMR analysis exhibited transformation to the corresponding dichloridite **2c** (according to the invention) in 82% selectivity, a 14% drop in selectivity compared to Example 18.

Example 20 (not according to the invention): Synthesis of mixed phosphorochloridite **1d** and phosphorodichloridite **2b.** This example shows that a mixed chloridite derived from aromatic alcohols (ArOH) with little steric hindrance can be produced in high selectivity reaching a final chloridite concentration of 0.167 mol/l.

A solution of 60 ml of 1.0 molar PCl₃ in toluene and 0.6 ml 1.0 molar triethylamine in toluene were charged to a temperature-controlled 1000 ml baffled-flask equipped with an overhead stirrer. Under vigorous stirring, a solution of 59 ml 1.0 molar triethylamine in toluene and a solution of 59 ml 1.0 molar 2,4-xylenol in toluene were added separately and concurrently via two peristaltic pumps at 1.5 ml / min. During the addition period the reaction temperature was maintained at -10 °C. The ³¹P NMR analysis exhibited clean transformation to the corresponding dichloridite **2b** in 96% selectivity. Then 59.0 ml of each 1.0 molar triethylamine solution in toluene and 1.0 molar o-ethylphenol solution in toluene were added separately and concurrently via two peristaltic pumps at 1.5 ml/min. The ³¹P NMR analysis exhibited clean transformation to the corresponding mixed chloridite **1d** (δ 162.5) in 95 % overall selectivity.

### Example 21 (not according to the invention): Synthesis of mixed phosphorochloridite 1d and phosphorodichloridite 2c. This example shows that a mixed chloridite derived from aromatic alcohols with little steric hindrance can be produced in high selectivity reaching a final chloridite concentration of 0.333 mol/l.

In a temperature controlled 1000 ml baffled flask equipped with an overhead stirrer charged with 200mL of 1.0 molar PCl₃ in toluene and 2.0 ml 2.0 molar triethylamine in toluene, a solution of 98 ml 2.0 molar triethylamine in toluene and under vigorous stirring a solution of 98 ml 2.0 molar o-ethylphenol in toluene were added separately and concurrently via two peristaltic pumps at 2.0 ml/min. During the addition period the reaction temperature was maintained at -10°C. The ³¹P NMR analysis showed clean transformation to the corresponding dichloridite **2c** in 95% selectivity. Then 98 ml of each 2.0 molar triethylamine solution in toluene and 2.0 molar 2,4-xylenol solution in toluene were added separately and concurrently via two peristaltic pumps at 2 ml/min. The ³¹P NMR analysis exhibited clean transformation to the corresponding mixed chloridite **1d** in 96% overall selectivity.

### Example 22: Synthesis of a mixed phosphorochloridite 1g (illustrative) and phosphorodichloridite 2d (according to the invention). This example shows that a mixed chloridite derived from aromatic alcohols with little steric hindrance can be produced in high selectivity reaching a final chloridite concentration of 0.333 mol/l.

A temperature controlled 1000 ml baffled glass reactor with overhead stirrer was charged with 200 ml of 1.0 molar PCl3 in toluene and 2 ml 2.0 molar triethylamine in toluene. Under vigorous stirring a solution of 100 ml of 2.0 molar triethylamine in toluene and 100 ml of 2.0 molar thymol in toluene were added separately and concurrently via two peristaltic pumps over a period of 50 min. During the addition period, the reaction temperature was maintained at -10°C. The ³¹P NMR analysis showed clean transformation to the corresponding dichloridite **2d** (δ 181.2) (according to the invention) in 95% selectivity. Then, for purposes of illustration, 100 ml of each 2.0 molar triethylamine solution in toluene and 100 ml 2.0 molar 2,4-xylenol solution in toluene were added separately and concurrently via a dual syringe pump over a period of 50 min. The 31 P NMR analysis showed clean transformation to the corresponding chloridite **1g** (δ 159.9) in 96% overall selectivity.

### Example 23: Synthesis of phosphorochloridite 1e (illustrative) and phosphorodichloridite 2e (according to the invention). This example shows that aliphatic phosphorochloridites and phosphorodichloridites can be produced in good selectivity.

A temperature controlled 300 ml baffled round bottom flask was charged with a solution of 25 ml 2.0 molar PCl₃ in toluene. Under vigorous stirring a solution of 25 ml 2.0 molar triethylamine in toluene and a solution of 25 ml 2.0 molar ethyl alcohol in toluene were added separately and concurrently via a dual syringe pump over a period of 100 min. During the addition period the reaction temperature was maintained at -10°C. The ³¹P NMR analysis exhibited transformation to the corresponding dichloridite **2e** (according to the invention) in 94% selectivity. For illustrative purposes, another 25 ml of each 2.0 molar triethylamine solution in toluene and 2.0 molar ethyl alcohol solution in toluene were added separately and concurrently via dual syringe pump over a period of 100 min. The ³¹P NMR analysis exhibited transformation to the corresponding chloridite **1e** in 70% overall selectivity. Another 4.7 ml of each 2.0 molar triethylamine solution in toluene and 2.0 molar ethyl alcohol solution in toluene were added separately and concurrently via a dual syringe pump. The final product distribution was 82% phosphorochloridite **1e** and 18% triethylphosphite. No ethyl chloride was formed.

### Example 24: Synthesis of a phosphorochloridite 1f (illustrative) and phosphorodichloridite 2f (according to the invention). This example shows that a phosphorochloridite and phosphorodichloridite derived from a phenol without ortho-substituent can be produced in good selectivity.

A temperature controlled 300 ml baffled round bottom flask was charged with 25 ml of 2.0 molar PCl₃ in toluene. Under vigorous stirring a solution of 25 ml 2.0 molar triethylamine in toluene and a solution of 25 ml 2.0 molar phenol in toluene were added separately and concurrently via a dual syringe pump over a period of 100 min. During the addition period the reaction temperature was maintained at -10°C. The ³¹P NMR analysis exhibited transformation to the dichloridite **2f** (according to the invention) in 92% selectivity. For illustrative purposes, a second addition of 25 ml of each 2.0 molar triethylamine solution in toluene and 2.0 molar phenol solution in toluene were added separately and concurrently via a dual syringe pump over a period of 100 min. The ³¹P NMR analysis exhibited transformation to the corresponding chloridite **1f** in 80 % overall selectivity.

### Examples 25-40 (not according to the invention): Synthesis of mixed phosphites. These examples show the selective synthesis of mixed aromatic and aliphatic phosphites from phosphorochloridites 1a, 1c, 1d and 1e synthesized as described in examples 1, 18, 21 and 23.

To a 1 g aliquot of the corresponding crude phosphorochloridite and triethylammonium chloride suspension in toluene as prepared in Examples 1, 18, 21 and 23, about 1.2 equiv. of 2.0 molar NEt₃ in toluene was added. The mixture was stirred at 5° C and 1.0 equiv. of the respective alcohol or 0.5 equiv. of the respective diol was added. Of this product suspension, 0.4 ml of the reaction volume were combined with 0.8 ml of 0.1 molar triphenylphosphine oxide in C₆D₆ and the mixture was analyzed by ³¹P NMR. Results are given in Table 5. All NMR chemical shifts are given in ppm in reference to triphenylphosphineoxide (δ 25.6).

**Table 5: Yields for the synthesis of mixed phosphites (R¹O)(R²O)(R³O)P and (R¹Q)(R²O)₂P.**

| Results are derived from ³¹P NMR analysis and given as the molar equivalent fraction of each of the components in the reaction mixture. | | | |
|---|---|---|---|
| Example | chloridite purity | | overall yield |
| | chloridite | alcohol | target phosphite |
| | ³¹P NMR *δ* | | ³¹P NMR *δ* |
| 25 | 94% | | 94% |
| | 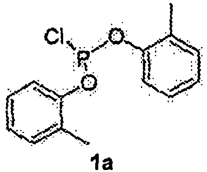 | **m-Cresol** | 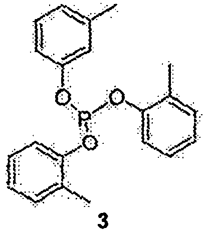 |
| | 161.9 | | 128.6 |
| 26 | 94% | | 94% |
| | 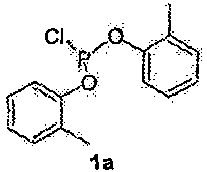 | **iso-Propanol** | 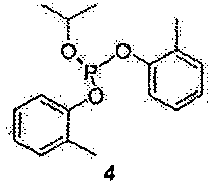 |
| | 161.9 | | 131.2 |
| 27 | 94% | | 94% |
| | 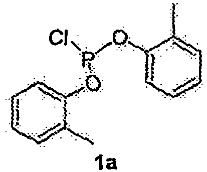 | **2,4-Xylenol** | 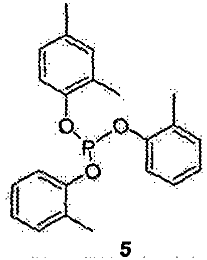 |
| | 161.9 | | 131.1 |

| Example | chloridite purity | | Overall yield |
|---|---|---|---|
| | chloridite | alcohol | target phosphite |
| | ³¹P NMR *δ* | | ³¹P NMR *δ* |
| 28 | 94% | | 94% |
| | 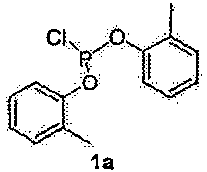 | **Phenol** | 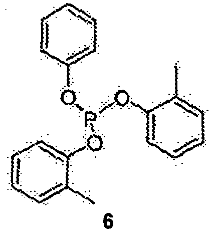 |
| | 161.9 | | 131.5 |
| 29 | 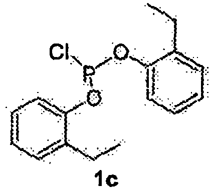 92% | **m-Cresol** | 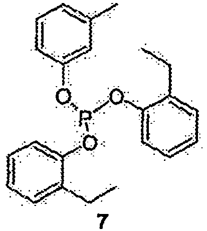 92% |
| | 161.5 | | 127.8 |
| 30 | 92% | | 92% |
| | 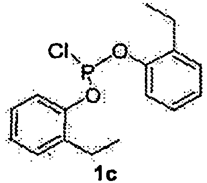 | **iso-Propanol** | 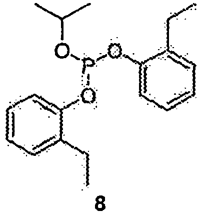 |
| | 161.5 | | 130.9 |

| Example | chloridite purity | | overall yield |
|---|---|---|---|
| | chloridite | alcohol | target phosphite |
| | ³¹P NMR *δ* | | ³¹P NMR *δ* |
| 31 | 92% | | 92% |
| | 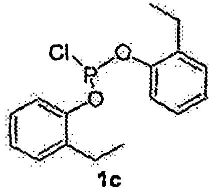 | **2,4-Xylenol** | 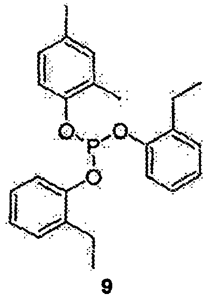 |
| | 161.5 | | 129.3 |
| 32 | 92% | | 92% |
| | 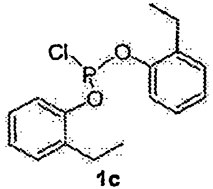 | **Phenol** | 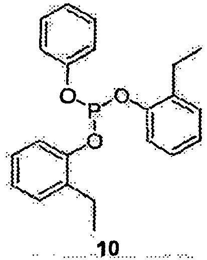 |
| | 161.5 | | 127.3 |
| 33 | 82% | | 82% |
| | 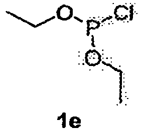 | **m-Cresol** | 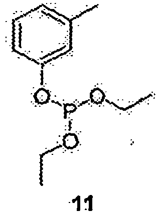 |
| | 167.4 | | 134.0 |

| Example | chioridite purity | | overall yield |
|---|---|---|---|
| | chloridite | alcohol | target phosphite |
| | ³¹P NMR δ | | ³¹P NMR δ |
| 34 | 82% | | 82% |
| | 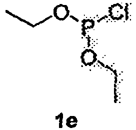 | **iso-Propanol** | 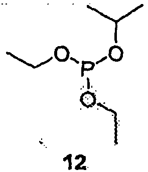 |
| | 167.4 | | 139.3 |
| 35 | 82% | | 82% |
| | 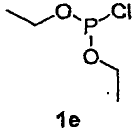 | **2,4-Xylenol** | 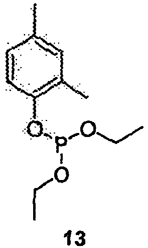 |
| | 167.4 | | 134.3 |
| 36 | 82% | | 82% |
| | 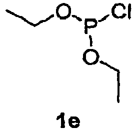 | **Phenol** | 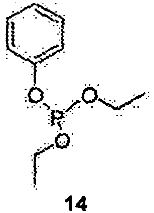 |
| | 167.4 | | 133.9 |

| Example | chloridite purity | | overall yield |
|---|---|---|---|
| | chloridite | alcohol | target phosphite |
| | ³¹P NMR δ | | ³¹P NMR δ |
| 37 | 94% | | 94% |
| | 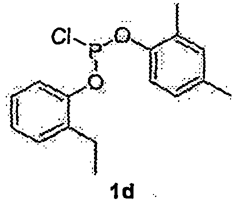 | **m-Cresol** | 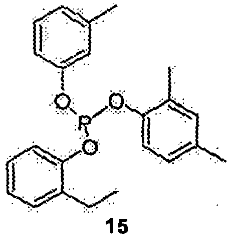 |
| | 162.5 | | 130.0 |
| 38 | 94% | | 94% |
| | 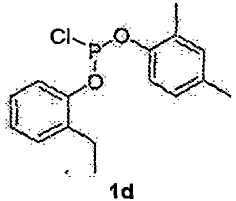 | **iso-Propanol** | 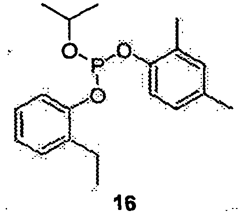 |
| | 162.5 | | 131.4 |
| 39 | 94% | | 94% |
| | 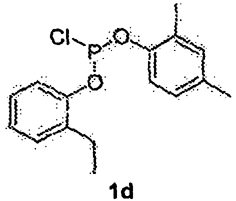 | **2,4-Xylenol** | 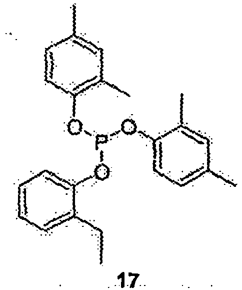 |
| | 162.5 | | 131.6 |
| 40 | 94% | | 94% |
| | 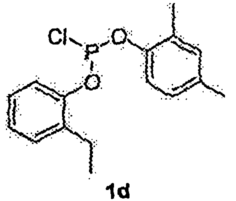 | **Phenol** | 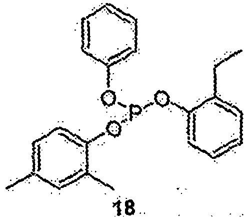 |
| | 162.5 | | 131.1 |
| 41 | 94% | | 90% |
| | 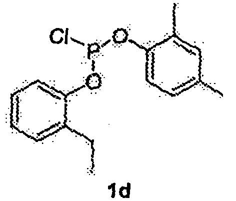 | **Bisnaphthol** | 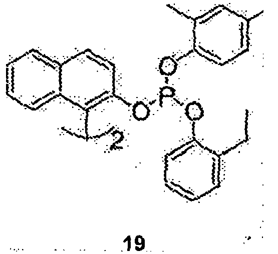 |
| | 162.5 | | 130.0 |
| 42 | 92% | | 88% |
| | 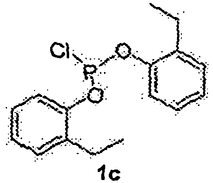 | **Bisnaphthol** | 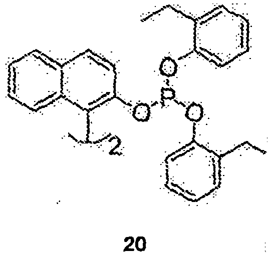 |
| | 161.5 | | 129.6 |
| 43 | 94% | | 90% |
| | 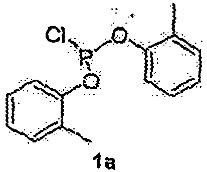 | **Bisnaphthol** | 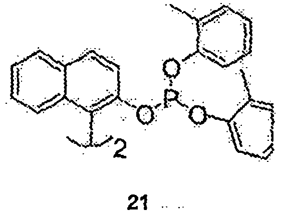 |
| | 161.9 | | 129.0 |

### COMPARATIVE EXAMPLES

### Comparative Example A: Synthesis of phosphorochloridite 1a and phosphorodichloridite 2a under conditions where a mixture of triorganoamine and alcohol was added to PCl₃ at 0.67 mol equiv / hr.

A temperature controlled 250 ml baffled flask was charged with 50 ml of 1.0 molar PCl₃ in toluene. Under vigorous stirring, a mixture of 25 ml 2.0 molar triethylamine in toluene and 25 ml 2.0 molar o-cresol in toluene was added via a single syringe pump over a period of 90 min. During the addition period the reaction temperature was maintained at -5 °C. The ³¹P NMR analysis showed transformation to the corresponding dichloridite **2a** in only 16% selectivity. The distribution was PCl₃ 56 %; dichloridite 7 %; chloridite 9 %; triarylphosphite 28%. Another mixture of 25 ml 2.0 molar triethylamine in toluene and 25 ml 2.0 molar o-cresol in toluene was added under vigorous stirring via a single syringe pump over a period of 90 min. During the addition period the reaction temperature was maintained at -5 °C. The ³¹P NMR analysis showed.transformation to the corresponding chloridite **1a** in only 14 % overall selectivity. The distribution was PCl₃ 21 %; dichloridite 7 %; chioridite 14 %; triarylphosphite 58 %.

### Comparative Example B: Synthesis of a phosphorochloridite 1a and phosphorodichloridite 2a under conditions where a mixture of triorganoamine and alcohol was added to PCl₃ at 0.3 mol equiv. / hr.

A temperature controlled 300 ml baffled round bottom flask was charged with 25 ml of 2.0 molar PCl₃ in toluene. Under vigorous stirring a mixture of 25 ml 2.0 molar triethylamine in toluene and 25 ml 2.0 molar o-cresol in toluene was added via a single syringe pump over a period of 200 min. During the addition period the reaction temperature was maintained at -5 °C. The ³¹P NMR analysis showed transformation to the corresponding dichloridite **2a** in only 14% selectivity. The distribution was PCl₃ 57 %; dichloridite 6 %; chloridite 10 %; and triarylphosphite 28 %. Another mixture of 25 ml 2.0 molar triethylamine in toluene and 25 ml 2.0 molar o-cresol in toluene was added under vigorous stirring via a single syringe pump over a period of 200 min. During the addition the reaction temperature was maintained at -5 °C. The ³¹P NMR analysis showed transformation to the corresponding chloridite **1a** in only 17 % overall selectivity. The distribution was PCl₃ 18 %; dichloridite 9 %; chloridite 17 %; and triarylphosphite 56 %.

### Comparative Example C: Synthesis of phosphorochloridite 1a and phosphorodichloridite 2a under conditions where two mol equivalents of the triorganoamine were added to a mixture of one equivalent of PCl₃ and two equivalents of alcohol.

A temperature controlled 300 ml baffled round bottom flask was charged with a mixture of 50 ml of 1.0 molar PCl₃ and 50 ml of 2.0 molar o-cresol both in toluene. A solution of 25 ml 2.0 molar triethylamine in toluene was added under vigorous stirring via a single syringe pump over a period of 100 min. During the addition period the reaction temperature was maintained at -5°C. The ³¹P NMR analysis showed transformation to the corresponding dichloridite **2a** in only 51 % selectivity. The distribution was PCl₃ 10 %; dichloridite 46 %; chloridite 29 %; triarylphosphite 15%. Another 25 ml of 2.0 molar triethylamine in toluene was added under vigorous stirring via a single syringe pump over a period of 100 min. During the addition period the reaction temperature was maintained -5 °C. The ³¹P NMR analysis showed transformation to the corresponding chloridite 1a in only 68 % overall selectivity. The distribution was dichloridite 14 %, chloridite 68 %, and triarylphosphite 18 %.

**Table 6: Comparison of yields for 1a and 2a for concurrent but separate addition procedure as given in example 2 with other procedures as given in Comparative Examples A-C.**

| Example | Temp (°C) | Mol equiv. ArOH and NEt₃ added | % **1a** | % **2a** | % PCl₃ | % (o-tolyl-O)₃P |
|---|---|---|---|---|---|---|
| 2 | -5 | 1.0 | 3 | 97 | 0 | 0 |
| | | 2.0 | 91 | 4 | 0 | 5 |
| A | -5 | 1.0 | 9 | 7 | 56 | 28 |
| | | 2.0 | 14 | 7 | 21 | 58 |
| B | -5 | 1.0 | 10 | 6 | 57 | 27 |
| | | 2.0 | 17 | 9 | 18 | 56 |
| C | -5 | 1.0 | 29 | 46 | 10 | 15 |
| | | 2.0 | 68 | 14 | 0 | 18 |

Comparative Examples D to G show the effect of the premix ratio of NEt₃ to ArOH in continuously but separately added components A and B on the selectivity of the conversion to phosphorochloridite **1a** and phosphorodichloridite **2a.** Distribution (Dis) represents the molar equivalent fraction of each of the components in the reaction mixture phosphorochloridite **1a**, phosphorodichloridite **2a,** PCl₃ and triarylphosphite ((o-tolyl-O)₃P) given in percent. The selectivity to **2a** is calculated as Sel₍₂ₐ₎ = Dis%₍₂ₐ₎ / (Dis%₍₂ₐ₎+ Dis%₍₁ₐ₎+ Dis%_{(triarylphosphite)}}. The total selectivity to **1a** is calculated as Sel₍₁ₐ₎ = Dis%₍₁ₐ₎ / (Dis%₍₁ₐ₎+ Dis%₍₂ₐ₎+ Dis%_{(triarylphosphite)}).

### Comparative Example D

A temperature controlled 500 ml baffled jacketed glass reactor with overhead stirrer was charged with 200 ml of 1.0 molar PCl₃ in toluene. A first solution (A) was prepared by mixing 0.2 mol of triethylamine and 0.2 mol of o-cresol and diluting that mixture with toluene to a total volume of 200 ml. A second solution (B) was prepared by mixing 0.2 mol of o-cresol and 0.2 mol of triethylamine and diluting that mixture with toluene to a total volume of 200 ml. Subsequently 100 ml of solution A and 100 ml of solution B were added separately and concurrently under vigorous stirring via a peristaltic pump over a period of 45 min. During the addition period the reaction temperature was maintained at 5 ° C. The ³¹P NMR analysis showed transformation to the corresponding dichloridite **2a** in 13% selectivity. The distribution was PCl₃ 56 %; dichloridite **2a** 9 %; chloridite **1a** 10 %; triarylphosphite 20%. Subsequently a second 100 ml of solution A and 100 ml of solution B were added separately and concurrently under vigorous stirring via a peristaltic pump over a period of 45 min. The ³¹P NMR analysis showed transformation to the corresponding chloridite **1a** in 19 % overall selectivity. The distribution was PCl₃ 18 %; dichloridite **2a 11** %; chloridite **1a** 16 %; triarylphosphite 55 %.

### Comparative Example E

A temperature controlled 500 ml baffled jacketed glass reactor with overhead stirrer was charged with 200 ml of 1.0 molar PCl₃ in toluene. A first solution (A) was prepared by mixing 0.32 mol of triethylamine and 0.08 mol of o-cresol and diluting that mixture with toluene to a total volume of 200 ml. A second solution (B) was prepared by mixing 0.32 mol of o-cresol and 0.08 mol of triethylamine and diluting that mixture with toluene to a total volume of 200 ml. Subsequently 100 ml of solution A and 100 ml of solution B were added separately and concurrently under vigorous stirring via a peristaltic pump over a period of 45 min. During the addition period the reaction temperature was maintained at 5 ° C. The ³¹P NMR analysis showed transformation to the corresponding dichloridite **2a** in 74% selectivity. The distribution was PCl₃ 23 %; dichloridite **2a** 57 %; chloridite **1a** 10 %; triarylphosphite 10 %. Subsequently a second 100 ml of solution A and 100 ml of solution B were added separately and concurrently under vigorous stirring via a peristaltic pump over a period of 45 min. The ³¹P NMR analysis showed transformation to the corresponding chloridite **1a** in 52 % overall selectivity. The distribution was dichloridite **2a** 21 %; chloridite **1a** 52 %; triarylphosphite 27 %.

### Comparative Example F

A temperature controlled 500 ml baffled jacketed glass reactor with overhead stirrer was charged with 200 ml of 1.0 molar PCl₃ in toluene. A first solution (A) was prepared by mixing 0.36 mol of triethylamine and 0.04 mol of o-cresol and dilutirig that mixture with toluene to a total volume of 200 ml. A second solution (B) was prepared by mixing 0.36 mol of o-cresol and 0.04 mol of triethylamine and diluting that mixture with toluene to a total volume of 200 ml. Subsequently 100 ml of solution A and 100 ml of solution B were added separately and concurrently under vigorous stirring via a peristaltic pump over a period of 45 min. During the addition period the reaction temperature was maintained at 5 ° C. The ³¹P NMR analysis showed transformation to the corresponding dichloridite **2a** In 88% selectivity. The distribution was PCl₃ 12 %; dichloridite **2a** 77 %; chloridite **1a** 8 %; triarylphosphite 3 %. Subsequently a second 100 ml of solution A and 100 ml of solution B were added separately and concurrently under vigorous stirring via a peristaltic pump over a period of 45 min. The ³¹P NMR analysis showed transformation to the corresponding chloridite **1a** in 79 % overall selectivity. The distribution was dichloridite 2a 9 %; chloridite **1a** 79 %; triarylphosphite 13 %.

### Comparative Example G

A temperature controlled 500 ml baffled jacketed glass reactor with overhead stirrer was charged with 200 ml of 1.0 molar PCl₃ in toluene. A first solution (A) was prepared by mixing 0.4 mol of triethylamine with toluene to a total volume of 200 ml. A second solution (B) was prepared by mixing 0.4 mol of o-cresol with toluene to a total volume of 200 ml. Subsequently 100 ml of solution A and 100 ml of solution B were added separately and concurrently under vigorous stirring via a peristaltic pump over a period of 45 min. During the addition period the reaction temperature was maintained at 5 ° C. The ³¹P NMR analysis showed transformation to the corresponding dichloridite **2a** in 97% selectivity. The distribution was PCl₃ 4 %; dichloridite **2a** 93 %; chloridite **1a** 3 %; triarylphosphite 0 %. Subsequently a second 100 ml of solution A and 100 ml of solution B were added separately and concurrently under vigorous stirring via a peristaltic pump over a period of 45 min. The ³¹P NMR analysis showed transformation to the corresponding chloridite **1a** in 92 % overall selectivity. The distribution was dichloridite **2a** 4 %; chloridite **1a** 92 %; triarylphosphite 4 %.

**Table 7: Comparison of Selectivity (Sel) and yields for 1a and 2a for the concurrent but separate addition procedure depending on the premix ratio of NEt₃ to ArOH in continuously but separately added components A and B as given in examples D-G.**

| Example | T (°C) | Premix ratio of NEt₃ to ArOH in components A and B | Mol equiv. ArOH and NEt₃ added | % Sel | % **1a** | % **2a** | % PCl₃ | % (o-tolyl-O)₃P |
|---|---|---|---|---|---|---|---|---|
| D | 5 | 1:1(A); 1:1(B) | 1.0 | 13 | 10 | 9 | 56 | 20 |
| | | | 2.0 | 19 | 16 | 11 | 18 | 55 |
| E | 5 | 4:1 (A); 1:4(B) | 1.0 | 74 | 10. | 57 | 23 | 10 |
| | | | 2.0 | 52 | 52 | 21 | 0 | 27 |
| F | 5 | 9:1(A); 1:9(B) | 1.0 | 88 | 8 | 77 | 12 | 3 |
| | | | 2.0 | 79 | 79 | 9 | 0 | 13 |
| G | 5 | Pure components A (NEt₃) and B (ArOH) | 1.0 | 97 | 3 | 93 | 4 | 0 |
| | | | 2.0 | 92 | 92 | 4 | 0 | 4 |

### Comparative Example H: Synthesis of phosphorochloridite 1e and phosphorodichloridite 2e under conditions where two mol equivalents of the triorganoamine were added to a mixture of one mol equivalent of PCl₃ and two mol equivalents of ethyl alcohol.

A temperature controlled 300 ml baffled round bottom flask was charged with a solution of 25 ml 2.0 molar PCl₃ in toluene and mixed with a -20 °C cold solution of 50 ml 2.0 molar ethyl alcohol in toluene. Under vigorous stirring a solution of 25 ml 2.0 molar triethylamine in toluene was added via a single syringe pump over a period of 100 min. During the addition period the reaction temperature was maintained at -10 °C. The ³¹P NMR analysis exhibited transformation to the corresponding dichloridite **2e** in only 48% selectivity. The distribution was dichloridite 48%, chloridite 24%, and 28% (EtO)₂PO(H) (δ 4.1) as a byproduct of ethyl chloride formation. Another solution of 25 ml 2.0 molar triethylamine in toluene was added via a single syringe pump over a period of 100 min. During the addition period the reaction temperature was maintained at -10°C. The ³¹P NMR analysis exhibited a transformation to the corresponding chloridite **1e** in 25 % overall selectivity. The distribution was dichloridite 46%, chloridite 25 %, and 29 % (EtO)₂PO(H) as a byproduct of ethyl chloride formation.

### Comparative Example I: Synthesis of phosphorochloridite 1e and phosphorodichloridite 2e under conditions where a mixture of two mol equivalents each of triorganoamine and alcohol were added to one equivalent of PCl₃

A temperature controlled 300 ml baffled round bottom flask was charged with 25 ml of 2.0 molar PCl₃ in toluene. Under vigorous stirring a mixture of 25 ml 2.0 molar triethylamine in toluene and 25 ml 2.0 molar ethyl alcohol in toluene was added via a single syringe pump over a period of 200 min. During the addition period the reaction temperature was maintained at-10 °C. The ³¹P NMR analysis exhibited transformation to the corresponding dichloridite **2e** in 26 % selectivity. The distribution was PCl₃ 61 %, dichloridite 10%, chloridite 13 % and triethylphosphite 16%. A second mixture of 25 ml both 2.0 molar triethylamine in toluene and 2.0 molar ethyl alcohol in toluene were added under vigorous stirring via a single syringe pump over a period of 200 min. During the addition period the reaction temperature was maintained at -10°C. The ³¹P NMR analysis exhibited transformation to the corresponding chloridite **1e** in 31% overall selectivity. The distribution was PCl₃ 18%, dichloridite 15%, chloridite 31 % and triethylphosphite 35%.

**TABLE 8: Comparison of yields for 1e and 2e through a concurrent but separate addition procedure as given in Example 23 with other procedures as given in Comparative Examples H and I.**

| Example | Temp (°C) | Equivalents EtOH and NEt₃ added | % 1e | % 2e | % PCl₃ | % (EtO)₂PO(H) | % (EtO)₃P |
|---|---|---|---|---|---|---|---|
| 23 | -10 | 1.0 | 4 | 79 | 14 | 0 | 3 |
| | | 2.0 | 70 | 1.9 | 0 | 0 | 11 |
| | | 2.18 | 82 | 0 | 0 | 0 | 18 |
| H | -10 | 1.0 | 24 | 48 | 0 | 28 | 0 |
| | | 2.0 | 25 | 46 | 0 | 29 | 0 |
| I | -10 | 1.0 | 13 | 10 | 61 | 0 | 16 |
| | | 2.0 | 31 | 15 | 18 | 0 | 35 |

## Claims

1. A method of producing (R¹O)PX₂ by the reaction of PX₃, alcohol R¹OH and a triorganoamine (R')(R")(R‴)N at a temperature greater than -25°C, such that the additions of the triorganoamine and the alcohol R¹OH are done in a separate but concurrent fashion or in a separate and in alternating portions of the triorganoamine and the respective alcohol, wherein X is selected from the group consisting of Cl, Br and I, R¹ is selected from the group consisting of C₁₋₁₈ alkyl, C₆₋₁₈ aryl and C₃-C₁₈ cycloalkyl radicals; and R'R"R‴ are independently selected from the group consisting of C₁ to C₁₈ alkyl, C₆ to C₁₈ aryl and C₄ to C₁₈ heteroaryl radicals;
wherein the amount of alcohol OH groups per phosphorus bound X groups is 1.00 to 1.2 molar equivalents of alcohol OH groups per molar equivalent of phosphorus bound X groups to be substituted;
wherein said method comprises contacting a first solution comprising a predetermined amount of PX₃ dissolved in an aprotic solvent with (i) a second solution comprising a predetermined amount of alcohol R¹OH and (ii) a third solution comprising a predetermined amount of triorganoamine (R')(R")(R‴)N to produce a composition comprising the compound (R¹O) PX₂;
wherein the second solution contains no triorganoamine and the third solution contains no alcohol.

2. The method according to claim 1, wherein the triorganoamine and alcohol are added in a separate but concurrent fashion in equimolar amounts such that the amount of molar equivalents of added alcohol OH groups does not exceed the molar equivalent amount of added triorganoamine at any given time.

3. The method according to claim 1 or claim 2, wherein the triorganoamine is a trialkylamine selected from the group consisting of trimethylamine, dimethylethylamine, diethylmethylamine, triethylamine, dimethylpropylamine and dimethyl isopropylamine.

## Patentansprüche

1. Verfahren zur Herstellung von (R¹O) PX₂ durch Umsetzen von PX₃, Alkohol R¹OH und einem Triorganoamin (R')(R")(R‴)N bei einer Temperatur von über -25°C, derart, dass das Versetzen mit dem Triorganoamin und dem Alkohol R¹OH getrennt, jedoch gleichzeitig oder in getrennten und abwechselnden Portionen des Triorganoamins und des jeweiligen Alkohols erfolgt, wobei X aus der Gruppe bestehend aus Cl, Br und I ausgewählt ist, R¹ aus der Gruppe bestehend aus C₁₋₁₈-Alkyl-, C₆₋₁₈-Aryl- und C₃-C₁₈-Cycloalkylresten ausgewählt ist; und R'R"R‴ unabhängig aus der Gruppe bestehend aus C₁-C₁₈-Alkyl-, C₆-C₁₈-Aryl- und C₄-C₁₈-Heteroarylresten ausgewählt sind;
wobei die Menge an Alkohol-OH-Gruppen pro phosphorgebundene X-Gruppen 1,00 bis 1,2 Moläquivalente Alkohol-OH-Gruppen pro Moläquivalent zu substituierende auf phosphorgebundene X-Gruppen beträgt;
wobei man bei dem Verfahren eine erste Lösung umfassend eine vorbestimmte Menge PX₃, das in einem aprotischen Lösungsmittel gelöst ist, mit (i) einer zweiten Lösung umfassend eine vorbestimmte Menge an Alkohol R¹OH und (ii) einer dritten Lösung umfassend eine vorbestimmte Menge an Triorganoamin (R')(R")(R‴)N in Kontakt bringt, wodurch eine Zusammensetzung umfassend die Verbindung (R¹O)PX₂ entsteht;
wobei die zweite Lösung kein Triorganoamin enthält und die dritte Lösung keinen Alkohol enthält.

2. Verfahren nach Anspruch 1, wobei das Triorganoamin und der Alkohol separat, jedoch gleichzeitig in äquimolaren Mengen derart hinzufügt werden, dass die Menge an Moläquivalenten an hinzufügten Alkohol-OH-Gruppen die Moläquivalentmenge an hinzugefügtem Triorganoamin zu einem beliebigen Zeitpunkt nicht überschreitet.

3. Verfahren nach Anspruch 1 oder Anspruch 2, wobei es sich bei dem Triorganoamin um ein Trialkylamin ausgewählt aus der Gruppe bestehend aus Trimethylamin, Dimethylethylamin, Diethylmethylamin, Triethylamin, Dimethylpropylamin und Dimethylisopropylamin handelt.

## Revendications

1. Procédé de production de (R¹O) PX₂ par la réaction de PX₃, d'un alcool R¹OH et d'une triorganoamine (R')(R")(R‴)N à une température supérieure à -25°C, de façon à effectuer les additions de la triorganoamine et de l'alcool R¹OH séparément mais en même temps ou séparément et par fractions alternées de la triorganoamine et de l'alcool respectif, dans lequel X est choisi dans le groupe constitué par Cl, Br et I, R¹ est choisi dans le groupe constitué par les radicaux alkyle en C₁₋₁₈, aryle en C₆₋₁₈ et cycloalkyle en C₃-C₁₈ ; et R'R"R‴ sont choisis indépendamment dans le groupe constitué par des radicaux alkyle en C₁ à C₁₈, aryle en C₆ à C₁₈ et hétéroaryle en C₄ à C₁₈,
dans lequel la quantité de groupes OH d'alcool par groupes X liés au phosphore est 1,00 à 1,2 équivalent molaire de groupes OH d'alcool par équivalent molaire de groupes X liés au phosphore à substituer ;
dans lequel ledit procédé comprend la mise en contact d'une première solution comprenant une quantité prédéterminée de PX₃ dissoute dans un solvant aprotique avec (i) une deuxième solution comprenant une quantité prédéterminée d'alcool R¹OH et (ii) une troisième solution comprenant une quantité prédéterminée de triorganoamine (R')(R")(R‴)N pour produire une composition comprenant le composé (R¹O)PX₂ ;
dans lequel la deuxième solution ne contient pas de triorganoamine et la troisième solution ne contient pas d'alcool.

2. Procédé selon la revendication 1, dans lequel la triorganoamine et l'alcool sont ajoutés séparément mais en même temps en quantités équimolaires de telle sorte que le nombre d'équivalents molaires de groupes OH d'alcool ajouté ne dépasse pas le nombre d'équivalents molaires de triorganoamine ajoutée à tout instant donné.

3. Procédé selon la revendication 1 ou la revendication 2, dans lequel la triorganoamine est une trialkylamine choisie dans le groupe constitué par la triméthylamine, la diméthyléthylamine, la diéthyl-méthylamine, la triéthylamine, la diméthylpropylamine et la diméthylisopropylamine.
